# EUROPÄISCHE PATENTSCHRIFT

(11) **EP 2 037 061 B1**
(45) Veröffentlichungstag und Bekanntmachung des Hinweises auf die Patenterteilung: **21.12.2011**
(21) Anmeldenummer: 08010557.0
(22) Anmeldetag: 11.06.2008
(51) Int. Cl.: E05B 15/02, E05B 47/06, H04N 7/18

(54) **Türbeschlag**
Escutcheon plate
Plaque de porte

(30) Priorität: 14.09.2007 DE 102007043974
(43) Veröffentlichungstag der Anmeldung: 18.03.2009
(73) Patentinhaber: primion Technology AG, 72510 Stetten a.k.M. (DE)
(72) Erfinder: Steigmayer, Georg, 72336 Balingen (DE)
(74) Vertreter: Daub, Thomas

(56) Entgegenhaltungen:
- EP-A2- 0 316 590
- DE-U1- 29 701 330
- DE-U1-202005 008 396
- GB-A- 1 426 021
- GB-A- 2 168 420
- US-A1- 2005 134 484
- US-B1- 6 244 084

## Beschreibung

### Stand der Technik

Die Erfindung geht aus von einem Türbeschlag nach dem Oberbegriff des Anspruchs 1.

Aus der Druckschrift EP 0 316 590 A2 ist bereits ein Türbeschlag nach dem Oberbegriff des Anspruchs 1 bekannt. Der Türbeschlag weist ein Innenlangschild auf, welches aus vier Haupteilen besteht, nämlich aus einer Basisplatte, einem Innenschilddeckel, einem die Steuerelektronik enthaltenden Elektronikgehäusekasten und dem letzteren verschließenden Gehäusedeckel. Der Innenschilddeckel besteht vorzugsweise aus einem Strangpreßprofil, insbesondere auf Alu-Basis in dessen entsprechend abgelängten Enden Kunststoffkappen eingesteckt sind.

Der Erfindung liegt insbesondere die Aufgabe zugrunde, einen auf unterschiedliche Anforderungen angepassten Türbeschlag bereitzustellen. Sie wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einem Türbeschlag mit einem Grundkörper, wobei der Grundkörper als ein Strangpressprofil aus gebildet ist und wobei ein Einsatz vorgesehen ist, der einen Endbereich des Türbeschlags bildet und der dazu vorgesehen ist, den Grundkörper nach oben abzuschließen. Es wird vorgeschlagen, dass der Einsatz zumindest eine Prozessoreinheit umfasst.

Unter einem "Strangpressprofil" soll ein Profil verstanden werden, das mittels einer Matrize und einem durch die Matrize gepressten Pressling hergestellt wird. Die Matrize definiert dabei das Strangpressprofil. Vorzugsweise beträgt eine Länge eines mittels eines Rohlings, der mit einem Strangpressverfahren hergestellt wird, mehr als einen Meter. Durch eine erfindungsgemäße Ausgestaltung kann eine Länge des Grundkörpers einfach durch entsprechendes Stückeln des Rohlings definiert werden, wodurch ein auf unterschiedliche Anforderungen angepasster Türbeschlag einfach hergestellt werden kann. Mittels eines Einsatzes, der vorteilhafterweise den Innenraum des Grundkörpers nutzt, kann der Türbeschlag besonders einfach an unterschiedliche Anforderungen angepasst werden. Weiter wird durch den Einsatz der Grundkörper in die nach oben gerichtete Richtung abgeschlossen Erfindungsgemäß, umfasst der Einsatz zumindest eine Prozessoreinheit, somit kann der Einsatz besonders flexibel ausgestaltet und besonders einfach an verschiedene Funktionen angepasst werden.

Weiter wird vorgeschlagen, dass der Grundkörper im Wesentlichen aus Aluminium besteht. Unter "im Wesentlichen" soll in diesem Zusammenhang insbesondere verstanden werden, dass der Grundkörper zu mehr als 50% aus Aluminium besteht. Aluminium ist als ein Werkstoff für den Türbeschlag vorteilhaft, da es besonders leicht und einfach zu bearbeiten ist.

Vorteilhafterweise weist der Grundkörper einen im Wesentlichen U-förmigen Querschnitt auf. Dadurch wird innerhalb des Grundkörpers ein Innenraum frei, der vorteilhaft für die Ausgestaltung der Erfindung genutzt werden kann. Unter einem "Querschnitt" soll dabei insbesondere ein Schnitt senkrecht zu einer Richtung des Strangpressprofils verstanden werden. Unter einem "im Wesentlichen U-förmigen" Querschnitt soll insbesondere ein Querschnitt verstanden werden, der eine Krümmung oder Biegung aufweist, die insgesamt größer als 90° und vorteilhafterweise gleich 180° beträgt.

Weiter wird vorgeschlagen, dass der Einsatz vorwiegend aus Plastik ausgebildet ist. Unter "vorwiegend" soll in diesem Zusammenhang insbesondere verstanden werden, dass mehr als 50% der Bauteile des Einsatzes, die sichtbar sind, wenn der Einsatz montiert ist, aus Plastik bestehen. Plastik ist kostengünstig und leicht zu bearbeiten.

Außerdem wird vorgeschlagen, dass der Einsatz als ein Modul ausgestaltet ist. Unter einem "Modul" soll insbesondere eine abgeschlossene Baugruppe von Einzelteilen verstanden werden, die dazu vorgesehen ist, eine bestimmte Funktion zu übernehmen. Ein Modul ist leicht auswechselbar, wodurch der Türbeschlag flexibel mit unterschiedlichen Funktionen ausgestaltet werden kann, und zwar insbesondere dann, wenn verschiedene Module mit unterschiedlichen Funktionen vorgesehen sind.

In einer Ausgestaltung der Erfindung wird vorgeschlagen, dass der Einsatz dazu vorgesehen ist, eine Zugangskontrollfunktion bereitzustellen. Unter einer Zugangskontrollfunktion soll dabei insbesondere eine Funktion verstanden werden, mittels der eine Zugangsberechtigung erteilt oder eine Kontrolle einer Person, die Zugang erhalten möchte, durchgeführt werden kann. Eine Zugangskontrollfunktion kann beispielsweise durch eine Code-Eingabe, einen elektronischen Schlüssel, wie beispielsweise mittels eines RFID-Standards, einen Fingerabdrucksensor und/oder durch eine Kamerafunktion, die das Bild an eine Bilderkennungssoftware oder einen Monitor weiterleitet, bereitgestellt werden. Eine solche Funktion kann besonders vorteilhaft mittels eines Türbeschlags bereitgestellt werden, da der Türbeschlag in unmittelbarer Nähe zu einem Türriegel angeordnet ist.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Die Erfindung wird durch die Patentansprüche definiert.

Es zeigen:
- Fig. 1: schematisiert einen Türbeschlag mit einer Kameravorrichtung,
- Fig. 2: den Türbeschlag in einer weiteren Ansicht,
- Fig. 3: schematisiert einen Türbeschlag mit einem Display und
- Fig. 4: den Türbeschlag aus Figur 3 in einer weiteren Ansicht.

### Beschreibung der Ausführungsbeispiele

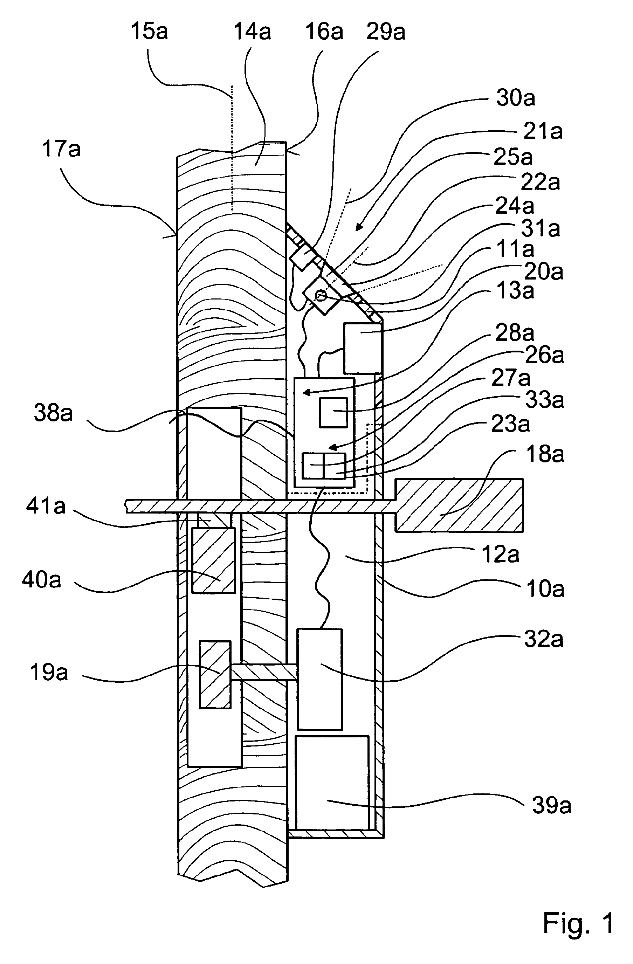

Figur 1 zeigt schematisiert eine Tür 14a mit einer Außenseite 16a und einer Innenseite 17a. Die Tür 14a weist einen Türbeschlag auf, der an der Außenseite 16a der Tür angeordnet ist. Die Tür 14a umfasst weiter einen Drücker 18a, mittels dem die Tür 14a geöffnet werden kann.

Der Türbeschlag weist einen Grundkörper 10a auf, der als ein Strangpressprofil ausgebildet ist und in einem Strangpressverfahren hergestellt wird. Der Grundkörper 10a besteht im Wesentlichen aus Aluminium. Ein Querschnitt des Grundkörpers 10a weist ein U-förmiges Profil auf, das einen frei nutzbaren Innenraum 12a hat. Der Türbeschlag umfasst einen Einsatz 11a, der einen Endbereich des Türbeschlags bildet und den Grundkörper 10a nach oben abschließt.

Die sichtbaren Bauteile des Einsatzes 11a bestehen vorwiegend aus Plastik. Der Einsatz 11a selber ist als ein Modul, das einfach ausgetauscht werden kann, ausgebildet. Alle Teile, insbesondere alle elektronischen Teile, die der Einsatz 11a aufweist, sind in Plastik eingegossen, um die Teile gegen Vibrationen und Feuchtigkeit zu schützen. Alternativ können die Teile auch, beispielsweise mittels eines PU-Schaums, eingeschäumt werden. Der Einsatz 11a weist eine Prozessoreinheit 13a auf und stellt eine Zugangskontrollfunktion bereit. Der Einsatz 11a liegt teilweise in dem Innenraum 12a des Grundkörpers.

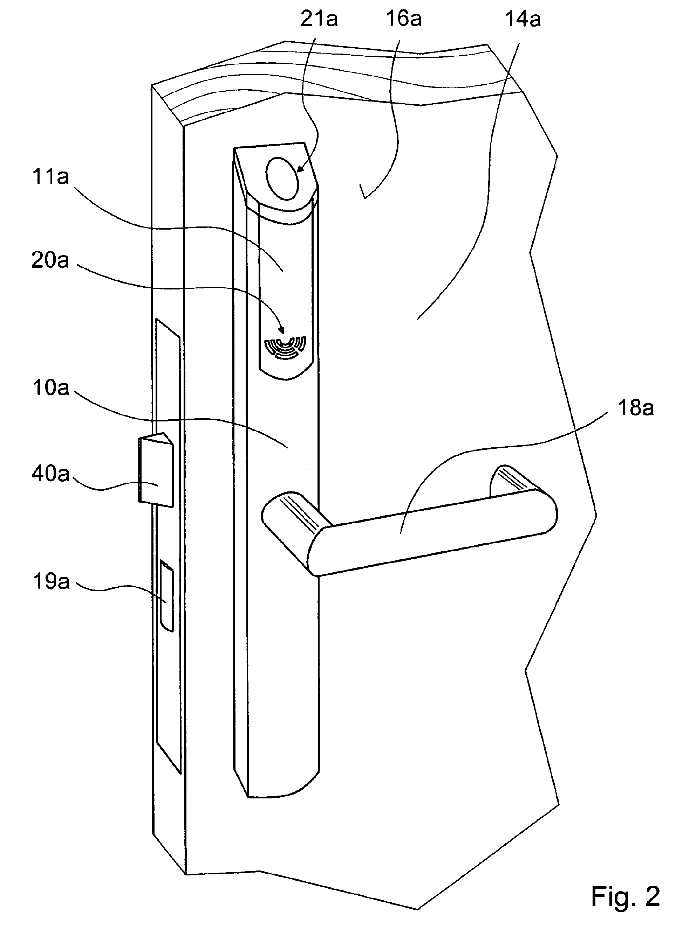

Der Einsatz 11a des Türbeschlags weist eine Kameravorrichtung 21a auf, die als das Modul des Einsatzes 11a des Türbeschlags ausgebildet ist (Figur 2). Die Kameravorrichtung 21a umfasst eine Einstellvorrichtung 31a, die mit einer geeigneten Aktuatorik ausgestattet ist und mittels der die Kameravorrichtung 21a in einen einstellbaren Winkel zwischen 30° und 60° zu einer Haupterstreckungsrichtung 15a der Tür 14a, die parallel zu einer Haupterstreckungsrichtung des Türbeschlags verläuft, eingestellt werden kann. In einer mittleren Stellung der Einstellvorrichtung 31a schließt die Aufnahmerichtung 22a einen Winkel von 45° mit der Haupterstreckungsrichtung 15a ein. Die Kameravorrichtung 21a weist ein Weitwinkelobjektiv 24a auf, das ein Blickfeld 30a mit einem Blickwinkel von 60° aufweist. Somit kann mittels der Kameravorrichtung 21a ein Winkelbereich von 0° bis 90° zu der Haupterstreckungsrichtung 15a erfasst werden. Es können grundsätzlich aber auch Objektive mit einem anderen Blickwinkel verwendet werden. Weiter weist die Kameravorrichtung eine Zoomvorrichtung 25a auf, die teilweise einteilig mit dem Weitwinkelobjektiv 24a ausgeführt ist und mittels der neben einem optischen Zoom auch ein digitaler Zoom realisierbar ist.

Zur Übertragung von Daten, insbesondere zur Übertragung der von der Kameravorrichtung 21a aufgenommenen Daten, umfasst der Einsatz 11a des Türbeschlags eine Datenübertragungsvorrichtung 26a, die einteilig mit der Prozessoreinheit 13a ausgeführt ist. Die Datenübertragungsvorrichtung 26a weist dabei eine Kommunikationsvorrichtung 33a zur Datenübertragung über ein Kabel 38a und eine Funkvorrichtung 27a zur drahtlosen Datenübertragung auf. Einteilig mit der Funkvorrichtung 27a ist eine Datenverschlüsselungsvorrichtung 23a ausgeführt, mittels der die über die Funkvorrichtung 27a gesendeten Daten verschlüsselt werden können, um ein Mitschneiden der übermittelten Daten zu verhindern.

Über die Funkvorrichtung 27a der Datenübertragungsvorrichtung 26a werden die Daten der Kameravorrichtung 21a an einen PC gesendet. An dem PC können die von der Kameravorrichtung 21a aufgezeichneten Daten und insbesondere die mittels der Kameravorrichtung 21a aufgezeichneten Bilder, die aus den Daten resultieren, wiedergegeben werden. Außerdem kann mittels des PCs eine Bilderkennung, wie beispielsweise eine biometrische Bilderkennung, ausgeführt werden.

Mit der Datenübertragungsvorrichtung 26a sind weiter neben der Kameravorrichtung 21a eine Ein- und Ausschaltvorrichtung 28a und eine Zugangsfreigabevorrichtung 20a verbunden, die ebenfalls in dem Einsatz 11a angeordnet sind. Insbesondere kann auch die Einstellvorrichtung 31a der Kameravorrichtung 21a über die Datenübertragungsvorrichtung 26a angesteuert werden.

Die Ein- und Ausschaltvorrichtung 28a aktiviert die Kameravorrichtung 21a nach einem entsprechenden Steuerungsbefehl für einen definierten Zeitraum. Sie deaktiviert die Kameravorrichtung 21a wieder, nachdem die Tür 14a geöffnet wurde oder wenn eine definierte Zeitspanne, die frei wählbar ist, verstrichen ist. Weiter wird gemeinsam mit der Kameravorrichtung 21a eine Beleuchtungsvorrichtung 29a aktiviert. Die Beleuchtungsvorrichtung 29a umfasst eine Infrarotdiode und leuchtet das Blickfeld 30a der Kameravorrichtung 21a aus. Alternativ zu einer grundsätzlichen Aktivierung der Beleuchtungsvorrichtung 29a mit der Kameravorrichtung 21a kann die Aktivierung der Beleuchtungsvorrichtung 29a auch von weiteren Parametern, wie beispielsweise einem Lichtverhältnis, abhängen.

Die Zugangsfreigabevorrichtung 20a, die ebenfalls über die Datenübertragungsvorrichtung 26a angesteuert werden kann, betätigt eine Türriegelbetätigungsvorrichtung 32a, die mit einem Türriegel 19a der Tür verbunden ist und die einen Elektromotor aufweist. Weiter betätigt die Zugangsfreigabevorrichtung 20a eine Türfallenbetätigungsvorrichtung 41a, die als eine Kupplungsvorrichtung ausgebildet ist, und die eine Türfalle 40a mit einem Drücker 18a verbinden kann. Die Türfallenbetätigungsvorrichtung 41a ist in diesem Ausführungsbeispiel innerhalb der Tür 14a angeordnet. Die Türfallenbetätigungsvorrichtung 41a kann grundsätzlich auch in dem Türbeschlag angeordnet werden. Mittels der Türfallenbetätigungsvorrichtung 41a und der Türriegelbetätigungsvorrichtung 32a kann die Zugangsfreigabevorrichtung 20a einen Zugang zu einem Raum freigeben oder den Raum gegen einen unerlaubten Zugang verriegeln.

Durch die Anbindung an die Datenübertragungsvorrichtung 26a kann der Raum über die Zugangsfreigabevorrichtung 20a von einem von der Tür entfernt stehenden PC freigegeben werden, wie beispielsweise von einem Sekretariat, das die durch die Kameravorrichtung 21a aufgenommenen Daten übermittelt bekommt.

Weiter kann die Zugangsfreigabevorrichtung 20a mittels eines elektronischen Schlüssels, der beispielsweise mittels eines RFID-Standards, eines Fingerabdrucks und/oder einer PIN-Eingabe realisierbar ist, aktiviert werden und gibt dann den Zugang zu dem Raum frei oder verriegelt den Raum. Mittels des Schlüssels kann der Zugang zu dem Raum direkt von der Tür 14a aus freigegeben werden. Weiter ist es denkbar, über die Bilderkennung am PC eine automatisierte schlüssellose Zugangsfreigabevorrichtung zu realisieren.

Ferner ist in dem Türbeschlag eine Energieversorgungseinheit 39a angeordnet. Die Energieversorgungseinheit 39a ist mittels einer Batterie- oder Akkueinheit ausgeführt, um eine unabhängige Energieversorgung zu erreichen. Alternativ ist auch eine Energieversorgung von außerhalb des Türbeschlags denkbar, wie beispielsweise eine Energieversorgung über ein Stromnetz eines Gebäudes oder, besonders vorteilhaft, über eine in die Tür integrierte Stromerzeugung, die beispielsweise eine Bewegungsenergie durch ein Öffnen und Schließen der Tür 14a in eine elektrische Energie umwandelt und diese einem Energiespeicher der Energieversorgungseinheit 39a zuführt.

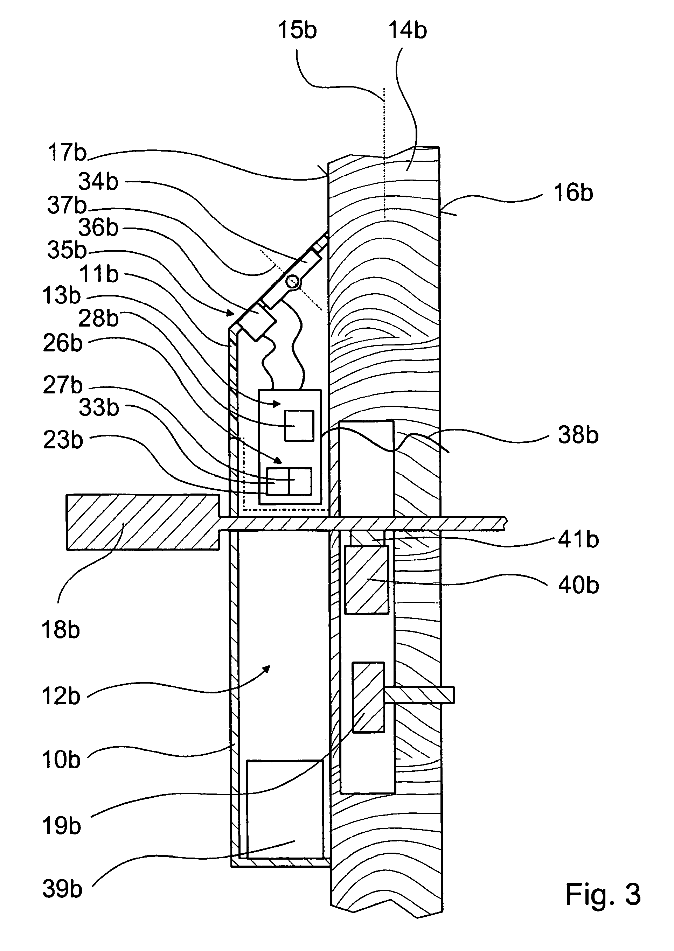

Figur 3 zeigt schematisiert eine Tür 14b mit einem Türbeschlag, der an einer Innenseite 17b der Tür angeordnet ist.

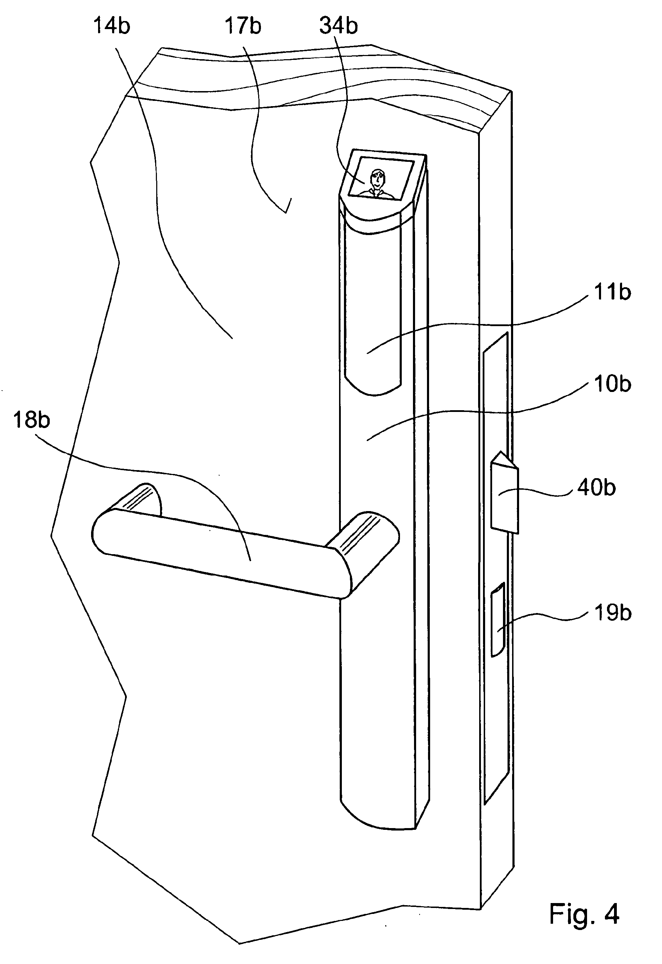

Zur Unterscheidung der Ausführungsbeispiele ist der Buchstabe a in den Bezugszeichen des Ausführungsbeispiels in den Figuren 1 und 2 durch den Buchstaben b in den Bezugszeichen der Ausführungsbeispiele in den Figuren 3 und 4 ersetzt. Die nachfolgende Beschreibung beschränkt sich im Wesentlichen auf die Unterschiede zu dem Ausführungsbeispiel in den Figuren 1 und 2, wobei bezüglich gleich bleibender Bauteile, Merkmale und Funktionen auf die Beschreibung des Ausführungsbeispiels in den Figuren 1 und 2 verwiesen werden kann.

Der Türbeschlag weist einen Einsatz 11b mit einem Display 34b auf, das als das Modul des Einsatzes 11b des Türbeschlags ausgebildet ist (Figur 4). Das Display 34b ist oben an dem Türbeschlag angeordnet. Das Display 34b ist als ein organisches Display ausgebildet und weist eine Normalrichtung 37b auf, die manuell durch einen Benutzer in einem Winkel von 30° bis 60° zu einer Haupterstreckungsrichtung des Türbeschlags, die parallel zu der Haupterstreckungsrichtung 15b der Tür 14b verläuft, einstellbar ist, wobei die Normalrichtung 37b in einer mittleren Stellung einen Winkel von 45° mit der Haupterstreckungsrichtung 15b einschließt.

Der Einsatz 11b des Türbeschlags weist eine Datenübertragungsvorrichtung 26b mit einer Kommunikationsvorrichtung 33b auf, über die der Türbeschlag mittels eines Kabels 38b beispielsweise mit einem Türbeschlag nach dem Ausführungsbeispiel in den Figuren 1 und 2 verbindbar ist. Über die Datenübertragungsvorrichtung 26b empfangene Daten werden vorzugsweise an das Display 34b weitergeleitet, wodurch auf dem Display 34b ein Bild einer vor der Tür 14b stehenden Person angezeigt werden kann. Weiter umfasst die Datenübertragungsvorrichtung 26b eine Funkvorrichtung 27b mit einer Datenverschlüsselungsvorrichtung 23b, über die weitere Daten, wie beispielsweise Informationen für einen Hotelgast, empfangen und an das Display 34b weitergeleitet werden können.

Das Display 34b wird über eine Ein- und Ausschaltvorrichtung 28b des Türbeschlags aktiviert. Die Ein- und Ausschaltvorrichtung 28b ist mit einer Schaltervorrichtung 35b, die einen Drucktaster 36b umfasst, verbunden. Das Display 34b kann durch einen Druck auf den Drucktaster 36b aktiviert werden. Deaktiviert wird das Display 34b automatisch nach dem Öffnen der Tür 14b bzw. nach einer definierten Zeitspanne oder durch einen erneuten Druck auf den Drucktaster 36b. Alternativ zu der gezeigten Ausführung, bei dem der Drucktaster 36b neben dem Display 34b angeordnet ist, kann die Schaltervorrichtung 35b zumindest teilweise in Einheit mit einem Drücker 18b ausgeführt werden, wodurch eine Betätigung eines Drückers 18b, wie beispielsweise ein Antippen, sensiert und das Display 34b aktiviert werden kann.

Die Ein- und Ausschaltvorrichtung 28b des Türbeschlags, mittels der das Display 34b aktiviert werden kann, ist mit der Datenübertragungsvorrichtung 26b verbunden.

Durch ein Zusammenspiel der beiden Ausführungsbeispiele kann ein elektronischer Türspion realisiert werden. Fertigungstechnisch ist ein solcher Türspion einfach herstellbar, da beide Türbeschläge einen gleichen Grundkörper mit unterschiedlichen Einsätzen aufweisen.

Um Kosten und Bauteile zu reduzieren, können dann die Einsätze aufeinander abgestimmt werden. Vorzugsweise werden Einheiten oder Bauteile, die in den Einsätzen eine vergleichbare Funktion erfüllen, nur in einem der Einsätze ausgeführt, und der andere Einsatz wird über ein Kabel an diese Einheit angeschlossen.

So ist es beispielsweise vorteilhaft, eine Ein- und Ausschaltvorrichtung, die eine Ein- und Ausschaltfunktion für beide Einsätze bereitstellt, in einem der Einsätze anzuordnen. Weiter kann eine Datenübertragungsvorrichtungen für beide Türbeschläge ausgeführt werden, wobei insbesondere eine gemeinsame Funkvorrichtung und eine gemeinsame Datenverschlüsselungsvorrichtung vorteilhaft ist. Auch eine gemeinsame Energieversorgungseinheit beider Türbeschläge ist vorteilhaft.

Neben den gezeigten Türbeschlägen sind auch Türbeschläge denkbar, die einen Einsatz mit einer Fingerabdruckleseeinheit, einer Raumüberwachungseinheit und/oder einer Code-Eingabeeinheit aufweisen.

### Bezugszeichen

- 10a,b: Grundkörper
- 11a,b: Einsatz
- 12a,b: Innenraum
- 13a,b: Prozessoreinheit
- 14a,b: Tür
- 15a,b: Haupterstreckungsrichtung
- 16a,b: Außenseite
- 17a,b: Innenseite
- 18a,b: Drücker
- 19a,b: Türriegel
- 20a: Zugangsfreigabevorrichtung
- 21a: Kameravorrichtung
- 22a: Aufnahmerichtung
- 23a,b: Datenverschlüsselungsvorrichtung
- 24a: Weitwinkelobjektiv
- 25a: Zoomvorrichtung
- 26a,b: Datenübertragungsvorrichtung
- 27a,b: Funkvorrichtung
- 28a,b: Ein- und/oder Ausschaltvorrichtung
- 29a: Beleuchtungsvorrichtung
- 30a: Blickfeld
- 31a: Einstellvorrichtung
- 32a: Türriegelbetätigungsvorrichtung
- 33a,b: Kommunikationsvorrichtung
- 34b: Display
- 35b: Schaltervorrichtung
- 36b: Drucktaster
- 37b: Normalrichtung
- 38a,b: Kabel
- 39a,b: Energieversorgungseinheit
- 40a,b: Türfalle
- 41a,b: Türfallenbetätigungsvorrichtung

## Patentansprüche

1. Türbeschlag mit einem Grundkörper (10a; 10b),
wobei der Grundkörper (10a; 10b) als ein Strangpressprofil ausgebildet ist und wobei ein Einsatz (11a; 11b) vorgesehen ist, der einen Endbereich des Türbeschlags bildet und der dazu vorgesehen ist, den Grundkörper (10a; 10b) nach oben abzuschließen,
**dadurch gekennzeichnet, dass**
der Einsatz (11a; 11b) zumindest eine Prozessoreinheit (13a; 13b) umfasst.

2. Türbeschlag nach Anspruch 1,
**dadurch gekennzeichnet, dass**
der Grundkörper (10a; 10b) im Wesentlichen aus Aluminium besteht.

3. Türbeschlag nach Anspruch 1 oder 2,
**dadurch gekennzeichnet, dass**
der Grundkörper (10a; 10b) einen im Wesentlichen U-förmigen Querschnitt aufweist.

4. Türbeschlag nach Anspruch 1,
**dadurch gekennzeichnet, dass**
der Einsatz (11a; 11b) vorwiegend aus Plastik ausgebildet ist.

5. Türbeschlag zumindest nach Anspruch 1,
**dadurch gekennzeichnet, dass**
der Einsatz (11a; 11b) als ein Modul ausgestaltet ist.

6. Türbeschlag nach Anspruch 5,
**dadurch gekennzeichnet, dass**
der Einsatz (11a; 11b) dazu vorgesehen ist, eine Zugangskontrollfunktion bereitzustellen.

## Claims

1. Door fitting with a base body (10a; 10b), wherein the base body (10a; 10b) is designed as an extruded profile, and wherein an insert (11a; 11b) is provided, the insert (11a; 11b) forming an end region of the door fitting and being provided for delimiting the base body (10a; 10b) from above, **characterized in that** the insert (11a; 11b) comprises at least one processor unit (13a; 13b).

2. Door fitting according to Claim 1, **characterized in that** the base body (10a; 10b) is substantially composed of aluminium.

3. Door fitting according to Claim 1 or 2, **characterized in that** the base body (10a; 10b) has a substantially U-shaped cross section.

4. Door fitting according to Claim 1, **characterized in that** the insert (11a; 11b) is predominantly formed from plastic.

5. Door fitting at least according to Claim 1, **characterized in that** the insert (11a; 11b) is configured as a module.

6. Door fitting according to Claim 5, **characterized in that** the insert (11a; 11b) is provided for making an access control function available.

## Revendications

1. Ferrure de porte équipée d'un corps de base (10a ; 10b), le corps de base (10a ; 10b) prenant la forme d'un profilé extrudé et un insert (11a ; 11b) étant prévu, celui-ci formant une zone d'extrémité de la ferrure de porte et étant prévu pour bloquer le corps de base (10a ; 10b) vers le haut, **caractérisée en ce que** l'insert (11a ; 11b) comprend au moins une unité de processeur (13a ; 13b).

2. Ferrure de porte selon la revendication 1, **caractérisée en ce que** le corps de base (10a ; 10b) consiste pour l'essentiel en aluminium.

3. Ferrure de porte selon la revendication 1 ou 2, **caractérisée en ce que** le corps de base (10a ; 10b) présente une section transversale pour l'essentiel en forme de U.

4. Ferrure de porte selon la revendication 1, **caractérisée en ce que** l'insert (11a ; 11b) consiste principalement en plastique.

5. Ferrure de porte selon la revendication 1 au moins, **caractérisée en ce que** l'insert (11a ; 11b) prend une forme modulaire.

6. Ferrure de porte selon la revendication 5, **caractérisée en ce que** l'insert (11a ; 11b) est prévu pour mettre en place une fonction de contrôle d'accès.
